# EUROPEAN PATENT SPECIFICATION

(11) **EP 2 502 764 B1**
(45) Date of publication and mention of the grant of the patent: **15.01.2014**
(21) Application number: 11382075.7
(22) Date of filing: 22.03.2011
(51) Int. Cl.: B60G 7/00, B60G 21/055, F16C 7/02, F16C 11/06

(54) **Stabilizer link for a vehicle suspension and method for obtaining it**
Stabilisatorelement für eine Fahrzeugaufhängung und Herstellungsverfahren dafür
Lien stabilisateur pour amortisseur de véhicule et son procédé d'obtention

(43) Date of publication of application: 26.09.2012
(73) Proprietor: Edai Technical Unit, A.I.E., 48340 Amorebieta Vizcaya (ES)
(72) Inventor: Mosteiro Goyoaga, Jose Ramon, 48340 Amorebieta (Vizcaya) (ES)
(74) Representative: Carpintero Lopez, Francisco

(56) References cited:
- EP-A1- 0 712 741
- EP-A1- 1 712 379
- EP-A2- 0 479 598
- WO-A1-01/42034
- DE-A1- 3 843 331
- DE-A1- 19 522 336
- DE-A1-102006 013 646
- DE-A1-102006 049 540
- DE-A1-102006 051 609
- DE-A1-102008 015 799
- DE-C1- 3 921 468
- DE-U1-202007 001 892
- JP-A- 8 233 009
- US-A- 5 743 669
- US-A1- 2005 051 974

## Description

### Technical Field of the Invention

The present invention relates to a stabilizer link for a vehicle suspension as well as to a method for obtaining it, having an application in the field of the automotive component industry.

### Background of the Invention

The suspension systems of automotive vehicles today comprise stabilizer links which are arranged between the vehicle chassis and the suspension of each wheel. These links are usually formed by a tubular-shaped element incorporating respective housings at its ends for the assembly of articulations, usually rubber bearings or ball joints.

There is currently a wide range of stabilizer links which have different configurations according to each specific application, although these elements usually have a series of requirements that are common for all of them, which include having a determined torsional strength, having the lowest weight possible, allowing the fastest assembly possible and having the lowest cost possible.

European patent no. EP-1217233 discloses an articulated connecting part for connecting constructive elements arranged in the chassis of an automobile, in which the ends of a solid central part are flattened for providing a configuration which enables a simple housing for a ball joint.

On the other hand, international application no. WO-2007/147695 discloses a method for the production of a link for a multi-arm suspension in which the material used for obtaining it is reduced by means of a series of cutting and folding operations, such that a hollow U-shaped element is achieved which has limited strength features.

Consistent with the preceding link, European patent no. EP-1953012 discloses a link having an open section in which a ball joint is fixed in the hole of each end by means of the co-extrusion of a plastic casing.

Document EP-A-0 479 598, on which the preamble of claim 1 is based, discloses a vehicle suspension system comprising a stabiliser link comprising a longitudinal body having two ends and a central sector, having at each end a hole for receiving a spherical bushing of a ball joint, wherein the longitudinal body is formed from two identical parts having an open section, which are arranged such that they are facing one another by their open sides and remain attached by means of a plurality of plastically deformable attachment elements in the form of a plurality of integral tabs arranged in each part in a staggered manner, such that once each attachment tab is deformed by folding or crimping over, it prevents the separation of the parts, the parts having a substantially planar configuration and are obtained by means of mechanical stamping. The stabiliser link further comprises at least one leak-tight element located at one end suitable for protecting the spherical element of the articulation element.

The drawbacks of this link, and to a great extent in the aforementioned links as well, is that it has a high manufacturing cost as a result of having to manufacture parts with very accurate dimensions and complex shapes, in addition to the process for obtaining it being slow since it is necessary to fold each tab in order to attach both halves. Furthermore, none of these links allows replacing the support elements of a ball joint in the event of failure without replacing the entire link.

Document EP-A-0 721 741 discloses a hinged support (suitable for use as a stabilser link) with a rod-shaped (longitudinal body) section having bearing eyes provided at ends thereof and including first and second open shell parts each defining an open cavity (open section), said bearing eyes being made in one piece with both said first and said second open shell parts which are formed of plastics using an injection molding process, said first and second open shells being mirror images of each other (i.e. identical parts) and being tightly connected to each other to form said hollow section, said hollow section being closed in itself. Said open shell parts may be tightly connected by plastically deformable snap-in elements.

Document WO-A-01/42034 discloses a control arm used as a suspension link within a vehicle suspension system having two substantially similar elongated members obtained by mechanical stamping. Each member has a substantially W open shaped cross section and circular endplates. The endplates are coupled together with bushings that include a compressible member. A tubular outer shell of one of said first and second members surrounds a tubular inner shell of the other member and tubular inner shell is flared outwards, causing inner shell and outer shell to tightly abut one another and effectively lock together. During normal loading, this bushing arrangement keeps the two members spaced apart. This allows each member to bend and flex when subjected to longitudinal forces.

Documents DE-A-102006013646 and DE-A-102006049540 each disclose a vehicle suspension component (and in particular a wheel-guiding A-arm for e.g. passenger car) having first and second mirror image steel plate frame elements joined with one-another by means of spacer/attachment elements which maintain a specific distance between the elements. The spacer/attachment element is placed between the frame elements for simultaneously fixing the frame elements to each other. The frame elements extend from a wheel-sided connection section to structure-sided connection sections. The frame elements form a bush-like recess for a structure-sided bearing, and a bearing sleeve is arranged in the bush-like recess. The spacer/attachment element is designed as rivets, screws or welding pins. The spacer is introduced into holes provided in the body section of each of the triangular shaped frame elements which are arranged such that they are facing one another by their open sides and then plastically deformed in order to prevent the separation of the parts. In document DE-A-102006049540 the spacer/attachment element comprises a body portion and two facing bosses for being introduced through respective holes formed in the body section of each of the steel plate frame elements and being plastically deformed in a rivet-like fashion once introduced to prevent the separation of the parts. Neither document DE-A-102006013646 nor DE-A-102006049540 mentions the possibility of applying such a technique to the manufacture of a stabiliser link having a longitudinal body formed from two identical parts and having at each end a hole in which an articulation element is housed.

### Description of the Invention

A first aspect of the present invention relates to a stabilizer link defined in claim 1.

Said stabilizer link can be used for any type of articulation, either for ball joints or bearings, significantly reducing production costs given that an extremely lightweight single part is obtained which allows a quick assembly of the link for obtaining it and which allows the replacement of an articulation if needed without having to replace the entire link, all with optimal mechanical behavior, being sufficiently rigid.

To that end the stabilizer link for a vehicle suspension comprises the features defined in claim 1.

According to the invention, the longitudinal body is formed from two identical parts having an open section which are arranged such that they are facing one another precisely by their open sides, faces or areas and remain attached by means of at least one plastically deformable attachment element such that once it is deformed, it prevents the separation of the parts.

Other secondary aspects of the invention are defined in the dependent claims.

A second aspect of the invention relates to a method for obtaining a stabilizer link, which is defined in claim 13.

The method of the invention allows significantly reducing the production time and cost for the stabilizer link.

Other secondary aspects of the invention are defined in the dependent claims.

### Description of the Drawings

To complement the description that is being made and for the purpose of aiding to better understand the features of the invention according to a preferred practical embodiment thereof, a set of drawings is attached as an integral part of said description in which the following has been depicted with an illustrative and non-limiting character:

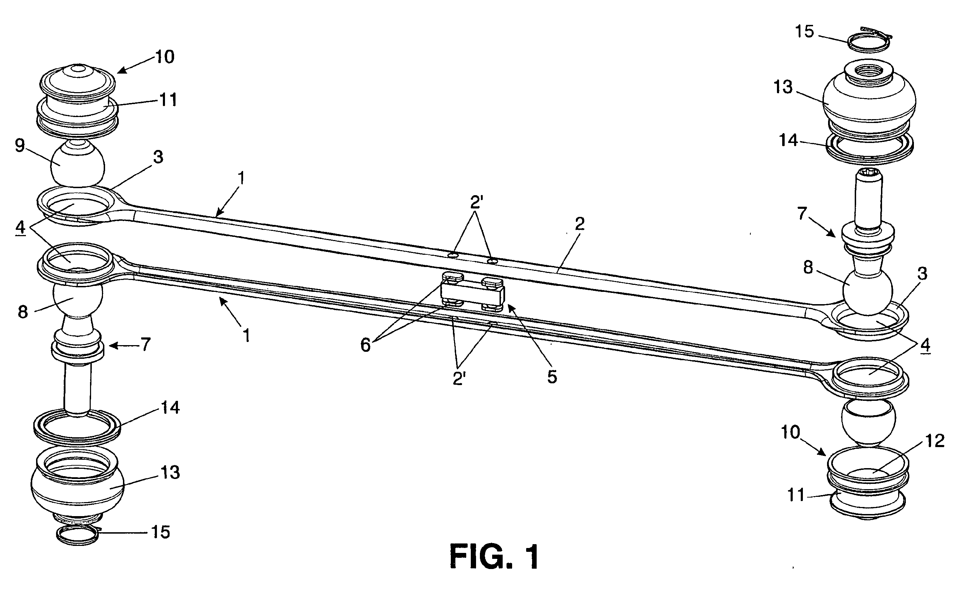

Figure 1 shows an exploded perspective view of a preferred embodiment of the stabilizer link of the invention, in which the external housing elements and the central attachment element are depicted in an already plastically deformed state.
Figure 2 shows three views, a plan view, elevational view and perspective view, of one of the two parts forming the longitudinal body of the link depicted in Figure 1.

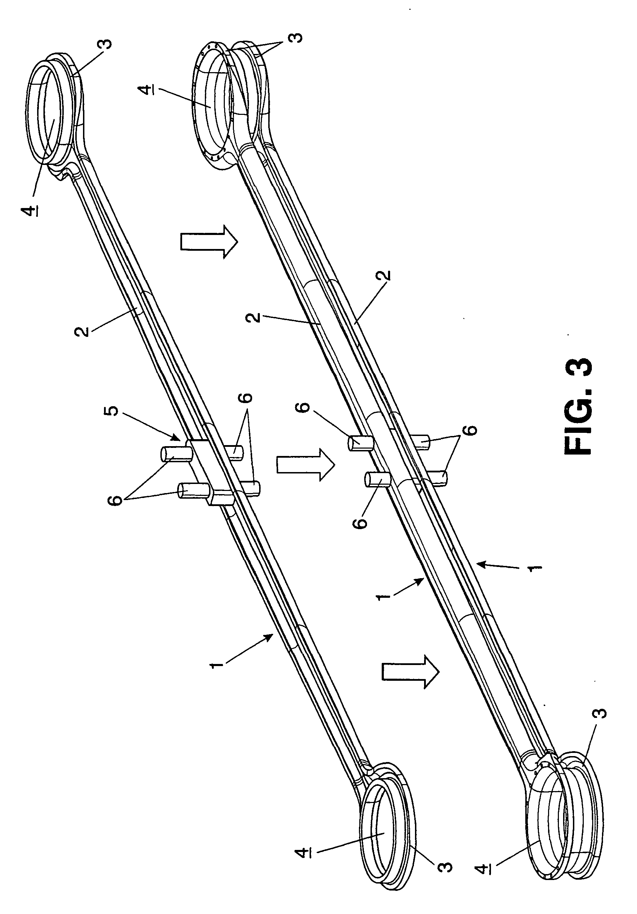

Figure 3 shows two perspective views illustrating a sequence for assembling the central attachment element for the attachment of the two parts forming the longitudinal body.

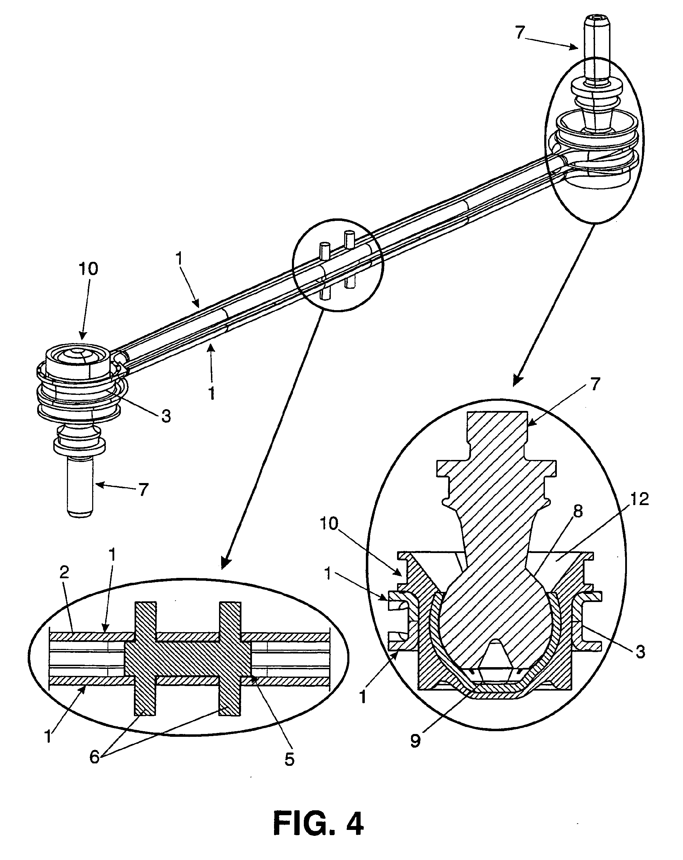

Figure 4 shows a perspective view and two schematic details of a step of the assembly process subsequent to that depicted in Figure 3, whereby the link of the invention is obtained, in which the bosses of the central attachment element and the bases of the external housing elements are plastically deformed.

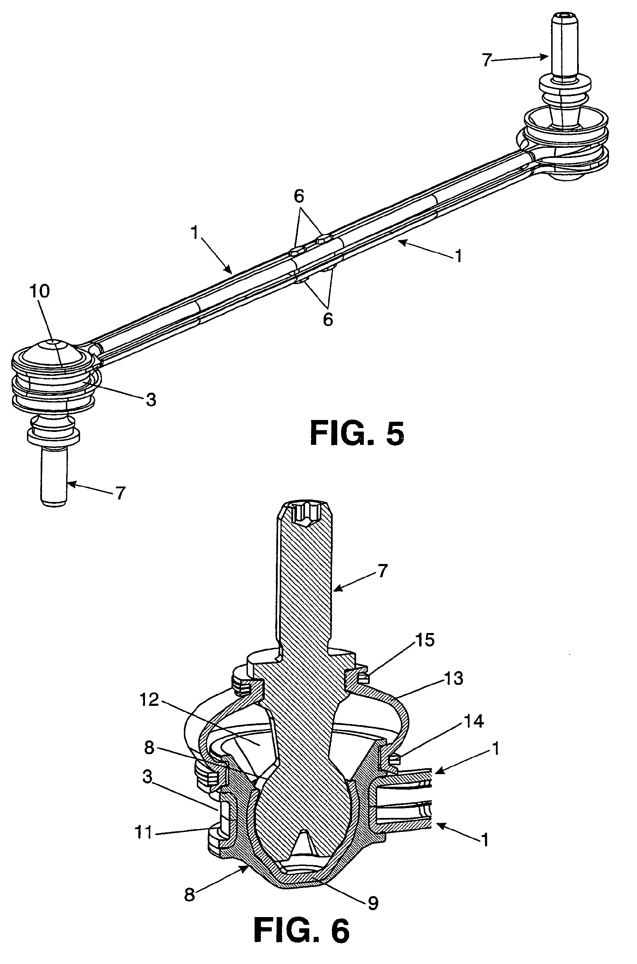

Figure 5 shows a perspective view of an assembly step subsequent to that depicted in Figure 4.
Figure 6 shows a longitudinal section, according to a perspective view, of one end of the link with an articulation element, in which the arrangement of a leak-tight element and of the corresponding gaskets can be seen.

### Preferred Embodiment of the Invention

In view of the discussed figures, it can be observed how in one of the possible embodiments of the invention the stabilizer link for a vehicle suspension proposed by the invention comprises a longitudinal body having two ends (3) and a central sector (2), having at each end (3) a hole (4) in which an articulation element (7) is housed.

The longitudinal body is formed from two identical parts (1) which are arranged such that they are facing one another and remain attached by means of at least one plastically deformable attachment element (5) such that once it is deformed, it prevents the separation of the parts (1).

Each part (1) likewise comprises at least one central hole (2') located in the central sector (2), where the central sector (2) of the parts (1) is hollow, the attachment element consisting of a central attachment element (5) which is housed inside the central sectors (2) of the facing parts (1).

The central attachment element (5) comprises at least two facing bosses (6) suitable for being introduced through a central hole (2') of each part (1) and being plastically deformed once introduced to prevent the separation of the parts (1).

The stabilizer link likewise comprises at least one external housing element (10) which can be introduced through the hole (4) defined by the facing ends (3) of two parts (1), said external housing element (10) being able to be plastically deformed at its base once introduced through the hole (4), preventing the separation of the parts (1) as they are retained in an annular groove (11) of the external housing element (10).

Said external housing element (10) internally has a housing (12) configured to tightly house and retain an internal housing element (9) having a spherical inner surface, suitable for housing a spherical element (8) of an articulation element (7).

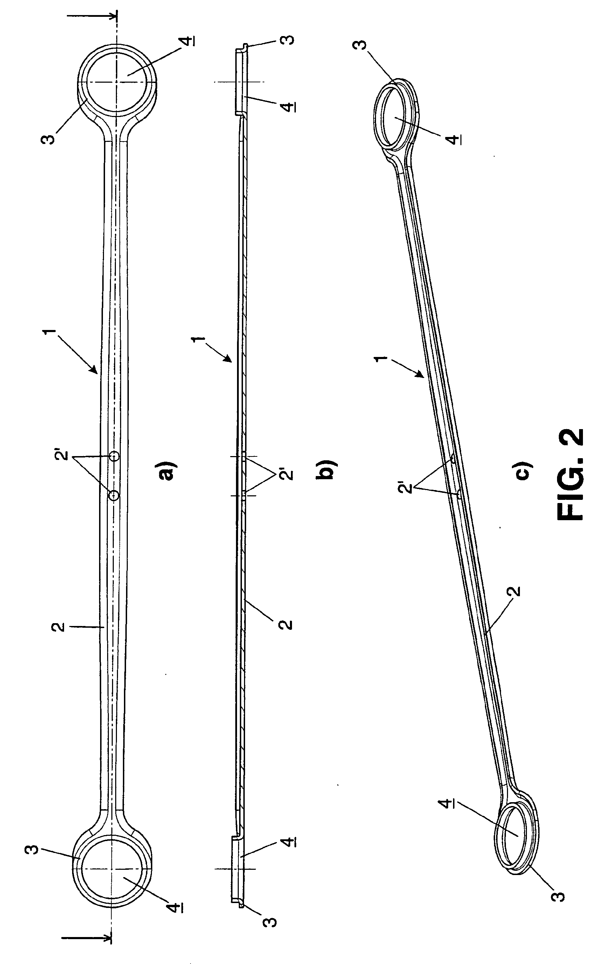

As can be seen in Figure 2, the central sector (2) of the parts (1) is slender and the holes (4) of the ends have a circular configuration, being concentric to the outer contour of the ends (3) which for the most part is also circular. The two holes (4) of the ends (3) are likewise aligned according to a longitudinal axis of the straight sector (2) of each part (1), which is symmetrical with respect to the longitudinal axis and has a substantially planar configuration.

It is likewise contemplated that the stabilizer link comprises at least one leak-tight element (13) located at one end (3) suitable for protecting the spherical element (8) of the articulation element (7), with the corresponding first gaskets (14), located entre the leak-tight element (13) and the external housing element (10), and second gaskets (15) arranged in the upper part for receiving the corresponding nut.

## Claims

1. Stabilizer link for a vehicle suspension, comprising a longitudinal body having two ends (3) and a central sector (2), having at each end (3) a hole (4) in which an articulation element (7) is housed, wherein the longitudinal body is formed from two identical parts (1) having an open section, which are arranged such that they are facing one another by their open sides and remain attached by means of at least one plastically deformable attachment element (5) such that once it is deformed, it prevents the separation of the parts (1), **characterized in that** each part (1) comprises at least one central hole (2') located in the central sector (2), wherein the central sector (2) of the parts (1) is hollow, the attachment element consisting of a central attachment element (5) which is housed inside the central sectors (2) of the facing parts (1), said central attachment element (5) comprising at least two facing bosses (6) suitable for being introduced through a central hole (2') of each part (1) and being plastically deformed once introduced to prevent the separation of the parts (1).

2. Stabilizer link according to claim 1, comprising at least one external housing element (10) which can be introduced through the hole (4) defined by the facing ends (3) of two parts (1), said external housing element (10) being able to be plastically deformed once introduced through the hole (4), preventing the separation of the parts (1).

3. Stabilizer link according to claim 2, wherein the external housing element (10) internally has a housing (12) configured to tightly house and retain an internal housing element (9) having a spherical inner surface, suitable for housing a spherical element (8) of an articulation element (7).

4. Stabilizer link according to any of claims 2 and 3, comprising an external housing element (10) housed in each end (3) of the parts (1).

5. Stabilizer link according to any of the preceding claims, wherein the central sector (2) of the parts (1) is slender and the holes (4) of the ends have a circular configuration, being concentric to the outer contour of the ends (3) which for the most part is also circular.

6. Stabilizer link according to claim 5, wherein the two holes (4) of the ends (3) are aligned according to a longitudinal axis of the straight sector (2) of each part (1).

7. Stabilizer link according to claim 6, wherein each part (1) is symmetrical with respect to the longitudinal axis.

8. Stabilizer link according to any of the preceding claims, wherein the parts (1) have a substantially planar configuration are obtainable by means of mechanical stamping.

9. Stabilizer link according to any of claims 3 to 8, comprising at least one leak-tight element (13) located at one end (3) suitable for protecting the spherical element (8) of the articulation element (7).

10. Suspension system comprising a stabilizer link according to any of claims 1 to 9.

11. Vehicle comprising a stabilizer link according to any of claims 1 to 9.

12. Vehicle according to claim 11, wherein the stabilizer link comprises a first articulation element (7) which is linked to a wheel of the vehicle, and a second articulation element (7) which is articulated to a frame of said vehicle.

13. Method for obtaining a stabilizer link for a vehicle suspension according to claim 1, comprising the following steps:
- obtaining two identical parts (1) by means of mechanical stamping, each part having a longitudinal body with two ends (3) and a central sector (2), each end (3) having a hole (4),
- arranging said parts (1) facing one another,
- placing at least one boss (6) of a central plastically deformable attachment element (5) in at least one central hole (2') of each part (1),
- plastically deforming said attachment element (5) until it prevents the separation of the parts (1).

14. Method according to claim 13, comprising:
- placing at least one external housing element (10) in a hole (4) defined by the facing ends (3) of the two parts (1), and
- plastically deforming the bosses (6) of said central attachment element (5) and said external housing element (10) until they prevent the separation of the parts (1).

## Patentansprüche

1. Stabilisatorelement für eine Fahrzeugaufhängung umfassend einen Längskörper, der zwei Endabschnitte (3) und einen Mittelabschnitt (2) aufweist, wobei der Längskörper an jedem Endabschnitt (3) eine Öffnung (4) aufweist, in der ein Gelenkelement (7) angeordnet ist, wobei der Längskörper aus zwei identischen Bauelementen (1) gebildet ist, die ein offenes Profil aufweisen und derart angeordnet sind, dass sich die offenen Profilseiten der Bauelemente (1) gegenüberliegen und mittels mindestens eines plastisch verformbaren Halterungselementes (5) derart zusammengehalten werden, dass das Halterungselement (5) das Trennen der Bauelemente (1) verhindert, sobald das Halterungselement (5) verformt wird,
**dadurch gekennzeichnet,**
**dass** jedes Bauelement (1) mindestens eine mittige Öffnung (2') umfasst, die in dem Mittelabschnitt (2) angeordnet ist, wobei der Mittelabschnitt (2) der Bauelemente (1) hohl ausgebildet ist, und wobei das Halterungselement bestehend aus einem in dem Mittelabschnitt (2) der sich gegenüberliegenden Bauelemente (1) angeordneten, mittigen Halterungselement (5) mindestens zwei gegenüberliegende Vorsprünge (6) umfasst, die durch eine Mittelöffnung (2') eines jeweiligen Bauelementes (1) einführbar sind und wobei das mittige Halterungselement (5) nach dem Einführen plastisch verformt ist, um das Trennen der Bauelemente (1) zu verhindern.

2. Stabilisatorelement nach Anspruch 1,
umfassend mindestens ein Außengehäuseelement (10), welches durch die Öffnung (4) einführbar ist, die durch die gegenüberliegenden Endabschnitte (3) der zwei Bauelemente (1) gebildet ist, wobei das Außengehäuseelement (10) nach dem Einführen durch die Öffnung (4) plastisch verformbar ist, um das Trennen der Bauelemente (1) zu verhindern.

3. Stabilisatorelement nach Anspruch 2, wobei das Außengehäuseelement (10) innenseitig ein Gehäuse (12) zum dichten Anbringen und Halten eines Innengehäuseelementes (9) aufweist, wobei das Innengehäuseelement (9) eine kugelförmige Innenfläche zur Aufnahme eines kugelförmigen Elementes (8) des Gelenkelementes (7) aufweist.

4. Stabilisatorelement nach Anspruch 2 oder 3, umfassend ein Außengehäuseelement (10) in jedem Endabschnitt (3) der Bauelemente (1).

5. Stabilisatorelement nach einem der Ansprüche 1 bis 4, wobei der Mittelabschnitt (2) der Bauelemente (1) schmal ausgebildet ist und die Öffnungen (4) der Endabschnitte (3) eine kreisförmige Bauform aufweisen, wobei die Öffnungen zur Außenkontur der Endabschnitte (3) konzentrisch angeordnet sind, wobei die Außenkontur größtenteils auch kreisförmig ausgebildet ist.

6. Stabilisatorelement nach Anspruch 5, wobei die zwei Öffnungen (4) der Endabschnitte (3) entlang einer Längsachse des geraden Abschnittes (2) jedes Bauelementes (1) ausgerichtet sind.

7. Stabilisatorelement nach Anspruch 6, wobei jedes Bauelement (1) symmetrisch zu der Längsachse ausgebildet ist.

8. Stabilisatorelement nach einem der vorhergehenden Ansprüche, wobei die Bauelemente (1) eine im wesentlichen ebene Bauform aufweisen und durch mechanisches Stanzen herstellbar sind.

9. Stabilisatorelement nach einem der Ansprüche 3 bis 8, umfassend mindestens ein Dichtungselement (13), welches zum Schutz des kugelförmigen Elementes (8) des Gelenkelements (7) an einem Endabschnitt (3) angeordnet ist.

10. Aufhängungssystem umfassend ein Stabilisatorelement nach einem der vorhergehenden Ansprüche.

11. Fahrzeug umfassend ein Stabilisatorelement nach einem der Ansprüche 1 bis 9.

12. Fahrzeug nach Anspruch 11, wobei das Stabilisatorelement ein erstes Gelenkelement (7) und ein zweites Gelenkelement (7) umfasst, wobei das erste Gelenkelement (7) mit einem Rad des Fahrzeugs verbunden und das zweite Gelenkelement an einem Rahmen des Fahrzeugs gelenkig angebracht ist.

13. Verfahren zur Herstellung von Stabilisatorelementen für eine Fahrzeugaufhängung nach Anspruch 1, umfassend folgende Schritte:
- Herstellen von zwei baugleichen Bauelementen (1) durch mechanisches Stanzen, wobei jedes Bauelement (1) einen Längskörper mit zwei Endabschnitten (3) und einen Mittelabschnitt (2) aufweist, wobei jeder Endabschnitt (3) eine Öffnung (4) aufweist.
- Anordnen der Bauelemente (1) in der Weise, dass sie sich gegenüberliegen.
- Platzieren mindestens eines Vorsprungs (6) eines mittigen, plastisch verformbaren Halterungselementes (5) in der mindestens einen Mittelöffnung (2') jedes Bauelementes (1).
- Plastisches Verformen des Halterungselementes (5) bis das Halterungselement (5) das Trennen der Bauelemente (1) verhindert.

14. Verfahren nach Anspruch 13, umfassend:
- Platzieren mindestens eines Außengehäuseelementes (10) in einer Öffnung (4), die durch die gegenüberliegenden Endabschnitte (3) der zwei Bauelemente (1) gebildet ist.
- Plastisches Verformen der Vorsprünge (6) des mittigen Halterungselementes (5) und des Außengehäuseelementes (10) bis sie das Trennen der Bauelemente (1) verhindern.

## Revendications

1. Elément de stabilisation pour une suspension de véhicule comprenant un corps longitudinal ayant deux extrémités (3) et un segment central (2), comportant à chaque extrémité (3) un perçage (4) dans lequel est logé un élément d'articulation (7), le corps longitudinal étant formé de deux parties identiques (1) ayant un tronçon ouvert qui sont réalisées de façon à être situées en regard l'une de l'autre par leurs côtés ouverts et à rester fixées au moyen d'au moins un élément de fixation (5) plastiquement déformable de sorte que lorsqu'il est déformé cet élément empêche la séparation des parties (1),
**caractérisé en ce que**
chacune des parties (1) comprend au moins un perçage central (2') situé dans le segment central (2), ce segment central (2) des parties (1) étant creux, l'élément de fixation étant constitué par un élément de fixation central (5) qui est logé à l'intérieur des segments centraux (2) des parties (1) situées en regard, cet élément de fixation central (5) comportant au moins deux bossages (6) situés en regard susceptibles d'être introduits dans un perçage central (2') de chacune des parties (1) et étant plastiquement déformé lorsqu'il a été introduit pour empêcher la séparation des parties (1).

2. Elément de stabilisation conforme à la revendication 1, comprenant au moins un élément de boitier externe (10) qui peut être introduit dans le perçage (4) défini par les extrémités situées en regard (3) des deux parties (1), cet élément de boitier externe (10) étant susceptible d'être plastiquement déformé lorsqu'il a été introduit dans le perçage (4), de façon à empêcher la séparation des parties (1).

3. Elément de stabilisation conforme à la revendication 2, dans lequel l'élément de boitier externe (10) comporte à sa partie interne un boitier (12) conformé pour envelopper hermétiquement et retenir un élément de boitier interne (9) ayant une surface interne sphérique, adaptée pour envelopper un élément sphérique (8) d'un élément d'articulation (7).

4. Elément de stabilisation conforme à l'une quelconque des revendications 2 et 3, comprenant un élément de boitier externe (10) logé dans chacune des extrémités (3) des parties (1).

5. Elément de stabilisation conforme à l'une quelconque des revendications précédentes, dans lequel le segment central (2) des parties (1) est mince et les perçages (4) des extrémités ont une configuration circulaire, concentrique au contour externe des extrémités (3) qui pour sa plus grande partie est également circulaire.

6. Elément de stabilisation conforme à la revendication 5, dans lequel les deux perçages (4) des extrémités (3) sont alignés selon l'axe longitudinal du secteur rectiligne (2) de chacune des parties (1).

7. Elément de stabilisation conforme à la revendication 6, dans lequel chacune des parties (1) est symétrique par rapport à l'axe longitudinal.

8. Elément de stabilisation conforme à l'une quelconque des revendications précédentes, dans lequel les parties (1) ont une configuration essentiellement plane et peuvent être obtenues par estampage mécanique.

9. Elément de stabilisation conforme à l'une quelconque des revendications 3 et 8, comprenant au moins un élément étanche aux fuites (13) situé à une extrémité (3) adapté pour protéger l'élément sphérique (8) de l'élément d'articulation (7).

10. Système de suspension comprenant un élément de stabilisation conforme à l'une quelconque des revendications 1 à 9.

11. Véhicule comprenant un élément de stabilisation conforme à l'une quelconque des revendications 1 à 9.

12. Véhicule conforme à la revendication 11, dans lequel l'élément de stabilisation comprend un premier élément d'articulation (7) qui est relié à une roue du véhicule et un second élément d'articulation (7) qui est articulé sur un cadre de ce véhicule.

13. Procédé d'obtention d'un élément de stabilisation pour une suspension de véhicule conforme à la revendication 1, comprenant les étapes consistant à :
- obtenir deux parties identiques (1) par estampage mécanique, chacune de ces parties ayant un corps longitudinal avec deux extrémités (3) et un segment central (2) chaque extrémité (3) ayant un perçage (4),
- positionner les parties (1) en regard l'une de l'autre,
- positionner au moins un bossage (6) d'un élément de fixation central plastiquement déformable (5) dans au moins un perçage central (2') de chaque partie (1),
- déformer plastiquement cet élément de fixation (5) de sorte qu'il empêche la séparation des parties (1).

14. Procédé conforme à la revendication 13, comprenant les étapes consistant à :
- positionner au moins un élément de boitier externe (10) dans un perçage (4) défini par les extrémités situées en regard des deux parties (1), et
- déformer plastiquement les bossages (6) de l'élément de fixation centrale (5) et l'élément de boitier externe (10) de sorte qu'ils empêchent la séparation de parties (1).
